Europäisches Patentamt

European Patent Office

Office européen des brevets

(11) Publication number: **0 133 327**
**B1**

(12) **EUROPEAN PATENT SPECIFICATION**

(45) Date of publication of patent specification: **01.06.88**

(51) Int. Cl.⁴: **G 01 N 30/00**

(21) Application number: **84200586.0**

(22) Date of filing: **25.04.84**

(54) Separating column for gas chromatography.

(30) Priority: **31.05.83 US 499123**

(43) Date of publication of application:
**20.02.85 Bulletin 85/08**

(45) Publication of the grant of the patent:
**01.06.88 Bulletin 88/22**

(84) Designated Contracting States:
**DE FR GB IT NL**

(56) References cited:
**CH-A- 386 732
CH-A- 408 460
GB-A-1 599 420
US-A-3 182 394
US-A-3 295 296
US-A-3 514 925**

**Hydrocarbon Processing, February 1972, pages 80-84**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Szakasits, Julius Jozsef
11614 Knobcrest
Houston Texas 77070 (US)**
Inventor: **Robinson, Robert Eugene
11631 Jaycreek
Houston Texas 77070 (US)**

(74) Representative: **Aalbers, Onno et al
P.O. Box 302
NL-2501 CH The Hague (NL)**

Courier Press, Leamington Spa, England.

## Description

This invention relates to a method of fabricating a gas chromatography separating column from an elongated capillary tube, said column having a layer comprising a plurality of disunited particles of porous solid material disposed on an inner surface of the tube. The invention also relates to a column fabricated according to such a method. Such columns are applied in the chromatographic analysis of mixtures of paraffins, naphthenes and aromatics (PNA-analysis) and are, for example, used in reformer process analyzers, which provide information on feed and product changes for catalytic reformers.

Conventional analyzers used in gas chromatography, for example as described in the article "Better gasoline chromatography" by H. Boer and P. van Arkel in "Hydrocarbon Processing" February 1972, pages 80—84, comprise a packed column. However, the separation results of such conventional packed columns for higher fractions such as $C_{11}$ and $C_{12}$ are not accurate.

For higher fractions there is an increasing overlap between the naphthene and paraffin bands that prevents accurate measurement of their relative distribution.

Therefore, it is an object of the invention to provide a column which is capable to measure quantitatively the paraffin/naphthene fractions with baseline or near-baseline separation throughout the entire sample.

It is another object of the invention to provide a column which can distinctly separate the isoparaffins and paraffins.

Therefore, the method of the present invention is characterized by the steps of: preparing a suspension comprising water and particles of finely divided 13X molecular sieve material (known per se) and settling the slurry thus obtained during a time interval of 30—120 minutes, filling an elongated capillary tube with the prepared suspension by pushing the suspension into the tube under a pressure of 27,5—82,5 kPa; and flowing an inert gas at 0.1—1 ml/min through the tube for 2—5 hours to dry the tube thereby leaving a layer comprising a plurality of disunited particles of said solid material attached to the inner surface of the tube, the particle size in the column ranging from 0.4—12.0 μm.

The gas chromatography separating column of the present invention is characterized by an elongated capillary tube; and a layer comprising a plurality of disunited particles of porous solid material disposed on the inner surface of said tube by filling said tube at a pressure of 27,5—82,5 kPa with a suspension comprising water and particles of finely divided 13X molecular sieve material (known per se) and obtained by settling the slurry during a time interval of 30—120 minutes, and flowing an inert gas at 0.1—1 ml/min through said tube for 2—5 hours to dry said tube thereby leaving a layer comprising a plurality of disunited particles of said solid material attached to the inner surface of said tube, the particle size in the column ranging from 0.4—12.0 μm.

The layer of finely divided particles provides a high resolution, type separation of naphthenes, isoparaffins and paraffins boiling up to 255°C.

It is remarked that CH—A—386,732, CH—A—408,460 and US—A—3,514,925 disclose open tubular chromatography columns wherein a layer of particles is disposed on an inner surface thereof. However the specific column of the invention cannot be derived therefrom.

The invention will now be described in more detail by way of example with reference to the accompanying drawings, in which:

Fig. 1 is a cross section through a separating column according to the present invention;

Fig. 2 is a chromatogram obtained with the column of the present invention;

Fig. 3 is a chromatogram obtained with the column of the present invention, and

Fig. 4 is a chromatogram obtained with a conventional packed column.

The method of the invention is carried out as follows:

A suspension of the solid particles in the liquid can be achieved by means of stirring or vibrating the slurry. Usually, a treatment of two to three minutes is sufficient if no additional comminution of the solid is desired. Before the slurry or suspension is pressed into the capillary tube it is advantageous to pass it through a pressure sieve in order to eliminate coarser agglomerates which could lead to cloggings in the capillary tube. An advantageous method of separating the desired sized particles is to allow the larger particles to settle during a predetermined time interval in the range of 30—120 minutes. One half to two thirds of the upper portion of the slurry is then pipetted into a separate container. The finely ground solid particles are molecular sieve type 13X. The capillary is filled by means of a pressure vessel and an inert gas, such as nitrogen, helium, argon and so forth. The pressure to be used depends on the diameter and the length of the capillary and on the viscosity of the suspension; usually the pressure is between 27,5—82,5 kPa (4—12 psig). The capillary tube should be cleansed from impurities by washing it thoroughly, such as by using 0.1—0.3 N HCl followed by water which is followed by acetone and finally water again, prior to filling. The purging of the tube is performed by flowing an inert gas, such as helium, through the tube to dry it thereby leaving a layer of material attached to the inner surface or wall of the tube. Usually a purge of 0.1—1 ml/min is maintained for approximately two to five hours to dry the tube. Next the column is stabilized at 420—440°C for about twice as long as the drying period.

The following examples are presented to provide a more complete understanding of the invention. The specific techniques, conditions, materials, proportions and reported data set forth to illustrate the principles and practice of the invention are exemplary and should not be construed as limiting the scope of the invention.

Example 1

Fifteen metres of stainless steel capillary tube with an inner diameter of 0.5 millimetres were conditioned with 8 ml of 0.1 N HCl and washed with water which was followed by acetone and finally water again. Next, 2.14 g of finely divided 13X molecular sieve material were suspended in 50 ml of deionized $H_2O$ and stirred rapidly. The slurry was allowed to settle for 60 minutes; then 10 ml of the slurry containing a 1:1000 w. ratio $13X/H_2O$ were pressed into the capillary tube at a pressure of 41,4 kPa (6 psig) while venting the excess to waste at a rate of 5—7 drops per minute. After the tube had been filled, the gas pressure on the slurry was gradually decreased to obtain a purge of $N_2$ at a rate of 0.5 ml/min which was maintained on the tube for two hours to dry it. The tube was then conditioned with a stream of He passing through the tube at a rate of 6 ml/min and at a temperature of 440°C for five hours. The column produced in this way contains about 1 mg of 13X molecular sieve material, and the particle size in the column ranges from 0.4—12.0 μm.

Example 2

Thirty-eight metres of a stainless steel capillary tube with an inner diameter of 0.38 millimetres were rinsed with 0.3 N HCl and washed with water which was followed by acetone and finally water. Then 5.75 g of finely ground 13X molecular sieve material were suspended in 250 ml $H_2O$ by stirring. The slurry was allowed to settle for 60 minutes. Then 10 ml of the slurry were separated and pressed into the capillary tube at a pressure of 75.8 kPa (11 psig), venting the excess to waste. After the tube had been filled in this manner, a purge of He at a rate of 0.2—0.3 ml/min for two hours was maintained on the tube. The tube was then conditioned with a stream of He passing through the tube at a rate of 4 ml/min and at a temperature of 440°C for six hours. The column produced in this way contains about 1 mg of 13X molecular sieve material, and the particle size in the column ranges from 0.4—12.0 μm.

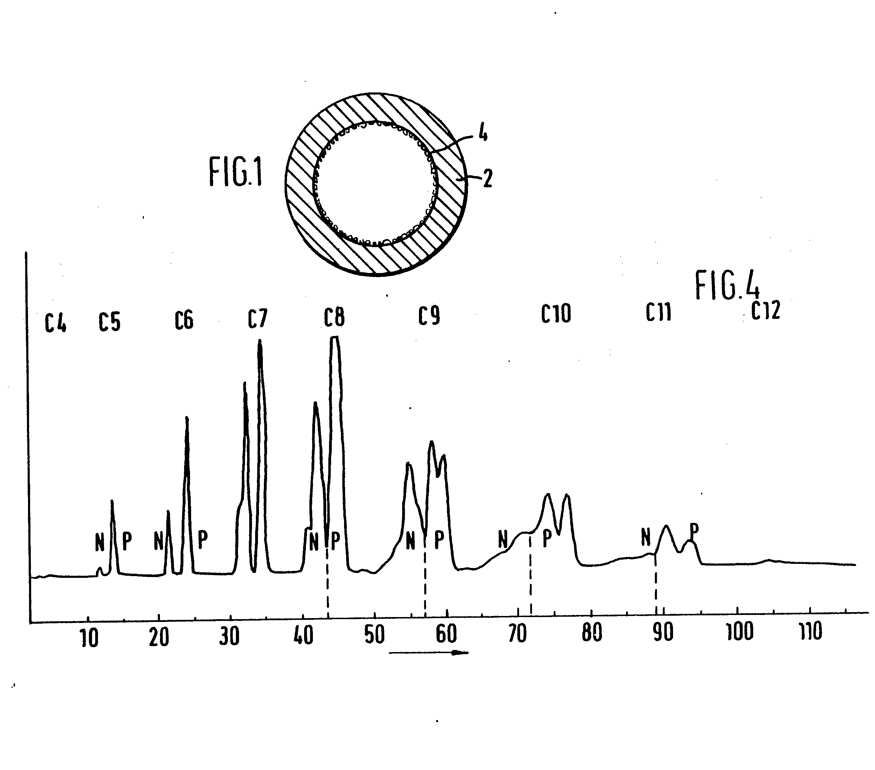

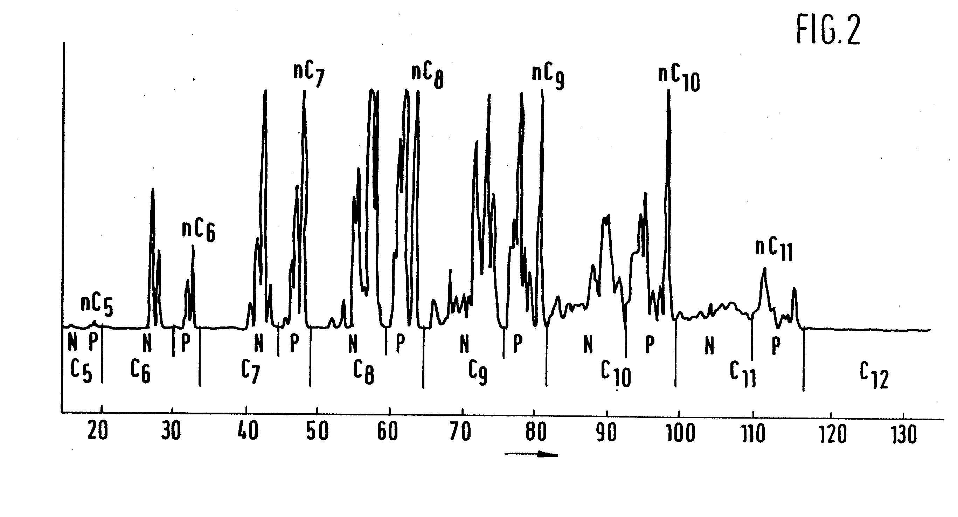

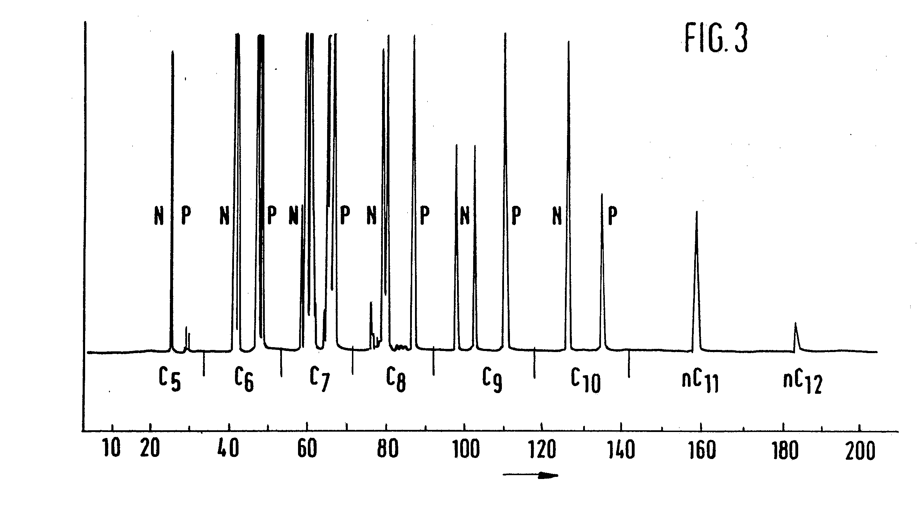

With reference now to Fig. 1 a cross section through a stainless steel capillary tube according to the present invention has been represented. A stainless steel tubing 2 has a layer 4 consisting of disunited, detached solid residue from a suspension of finely subdivided 13X molecular sieve material in $H_2O$ per Example 1 above. The important improvement achieved by the present invention is demonstrated by Figs. 2 and 3 which illustrate the chromatograms obtained with columns prepared according to Examples 1 and 2 respectively. The horizontal axes in Figs. 2 and 3 represent time (in min). The reference numerals N and P represent naphthene peaks and paraffin peaks respectively. The temperature program used with each of the columns to obtain the chromatograms in Figs. 2 and 3 was as follows: the column was maintained at an initial temperature of 100°C for five minutes; the temperature was then increased at a rate of 10.0°C/min until 150°C was reached; the temperature was maintained at 150°C for one minute; the temperature was then increased at a rate of 2.5°C/min until 288°C was reached; the temperature was then increased at a rate of 1.5°C/min until 440°C was reached; and the temperature was maintained at 440°C for forty-two minutes. For purposes of comparison, Fig. 4 illustrates a chromatogram obtained with a conventional 13X molecular sieve packed column which was one metre long and had an inside diameter of 1.27 millimetres and which was packed with 13X material having a size in the range of 60 to 80 mesh. The horizontal axis in Fig. 4 represents time (in min). The paraffin peaks and naphthene peaks have been represented by N and P respectively. The temperature program used with the packed 13X column to obtain the chromatogram in Fig. 4 was as follows: the column was maintained at an initial temperature of 178°C for five minutes; the temperature was then increased at a rate of 10.0°C/min until 198°C was reached; the temperature was then increased at a rate of 4.0°C/min until 330°C was reached; the temperature was then increased at a rate of 1.5°C/min until 390°C was reached; the temperature was then increased at a rate of 2.0°C/min until 410°C was reached; the temperature was then increased at a rate of 2.5°C/min until 445°C was reached; and the temperature was maintained at 445°C for sixteen minutes.

From Fig. 4 is is apparent that the carbon number of separation on a packed column for paraffins/naphthenes is quantitative through $C_8$ partially quantitative for $C_9$ and useful for $C_{10}$. However, for $C_{11}$ and $C_{12}$ saturates fractions there is increasing overlap between the naphthene and paraffin bands that prevents accurate measurement of their relative distribution. Comparing the results obtained with the column of the present invention as illustrated in Figs. 2 and 3, it is readily apparent that the column of the present invention distinctly separates the isoparaffins and paraffins. Moreover, quantitative measurement of the paraffin/naphthene fractions is carried out with baseline or near-baseline separation throughout the entire sample. A number of individual naphthenes and paraffins of interest can also be identified up to $C_8$. The column of the present invention also provides good peak shape through $C_{14}$ for better integration and quantitative measurement in the $C_9$ region. In addition, separation of the various hydrocarbon groups is generally carried out at a lower column temperature with the present invention, thus reducing the risk of oxidizing the sample as it is being separated.

Various modifications of the present invention will become apparent to those skilled in the art from the foregoing description and accompanying drawings. Such modifications are intended to fall within the scope of the appended claims.

**Claims**

1. A method of fabricating a gas chromatography separating column from an elongated capillary tube, said column havng a layer comprising a plurality of disunited particles of porous solid material disposed on an inner surface of the tube, comprising the steps of: preparing a suspension comprising water and particles of finely divided 13X molecular sieve material and settling the slurry thus obtained during a time interval of 30—120 minutes, filling an elongated capillary tube with the prepared suspension by pushing the suspension into the tube under a pressure of 27,5—82,5 kPa; and flowing an inert gas 0.1—1 ml/min through the tube for 2—5 hours to dry the tube thereby leaving a layer comprising a plurality of disunited particles of said solid material attached to the inner surface of the tube, the particle size in the column ranging from 0.4—12.0 µm.

2. A gas chromatography separating column comprising an elongated capillary tube; and a layer comprising a plurality of disunited particles of porous solid material disposed on the inner surface of said tube by filling said tube at a pressure of 27,5—82,5 kPa with a suspension comprising water and particles of finely divided 13X molecular sieve material and obtained by settling the slurry during a time interval of 30—120 minutes, and flowing an inert gas at 0.1—1 ml/min through said tube for 2—5 hours to dry said tube thereby leaving a layer comprising a plurality of disunited particles of said solid material attached to the inner surface of said tube, the particle size in the column ranging from 0.4—12.0 µm.

## Patentansprüche

1. Verfahren zur Herstellung einer Trennkolonne für die Gas-Chromatographie aus einem Kapillarrohr, in welchem sich an der Innenwand eine Schicht aus einer Vielzahl nicht verbundener Teilchen eines porösen Feststoffs befindet, durch folgende Verfahrensstufen: es wird eine Suspension von feinem Molekularsieb 13X in Wasser hergestellt und diese Suspension in 30 bis 120 min absetzen gelassen, worauf ein Kapillarrohr durch Einpressen der Suspension unter einem Druck von 27,5 bis 82,5 kPa mit der Suspension gefüllt wird und anschließend Inertgas mit einer Geschwindigkeit von 0,1 bis 1 ml/min zum Trocknen des Rohrs unter Bildung einer an der Innenwand haftenden Schicht einer Vielzahl unverbundener Teilchen des Feststoffs in 2 bis 5 h eingeleitet wird, wobei die Teilchengröße des Feststoffs in der Kolonne 0,4 bis 12 µm beträgt.

2. Trennkolonne für die Gas-Chromatographie enthaltend ein Kapillarrohr und an dessen Innenwand eine Schicht aus einer Vielzahl nicht verbundener Teilchen eines porösen Feststoffs, wobei letztere erhalten worden ist durch Füllen des Kapillarrohrs unter einem Druck von 27,5 bis 82,5 kPa mit einer wässrigen Suspension eines feinteiligen Molekularsiebs 13X, die 30 bis 120 min absitzen Konnte und Trocknen der gebildeten Schicht aus einer Vielzahl von nicht verbundenen Teilchen des Feststoffs, der eine Korngröße von 0,4 bis 12 µm besitzt, in einem Inertgasstrom von 0,1 bis 1 ml/min während 2 bis 5 h.

## Revendications

1. Un procédé de fabrication d'une colonne de séparation chromatographique en phase gazeuse à partir d'un tube capillaire allongé, cette colonne ayant une couche comprenant une multiplicité de particules séparées de matière solide poreuse disposées sur la surface intérieure du tube, comprenant les étapes qui consistent à: préparer une suspension comprenant de l'eau et des particules de matière pour tamis moléculaire 13X finement divisée et laisser déposer la bouillie ainsi obtenue pendant une période de 30—120 minutes, remplir un tube capillaire alongé avec la suspension préparée en poussant la suspension dans le tube sous une pression de 27,5—82,5 kPa; et faire passer un gaz inerte à 0,1—1 ml/min dans le tube pendant 2—5 heures pour sécher le tube de manière à laisser une couche comprenant une multiplicité de particules séparées de ladite matière solide attachées à la surface intérieure du tube, la grosseur des particules dans la colonne étant comprise entre 0,4 et 12,0 µm.

2. Une colonne de séparation chromatographique en phase gazeuse comprenant un tube capillaire allongé; et une couche comprenant une multiplicité de particules séparées de matière solide pressure disposées sur la surface intérieure de ce tube en remplissant le tube à une pression de 27,5—82,5 kPa avec une suspension comprenant de l'eau et des particules de matière pour tamis moléculaire 13X finement divisée et obtenue en laissant déposer la bouillie pendant une période de 30 à 120 minutes, et en faisant passer une gaz inerte à 0,1—1 ml/min dans le tube pendant 2—5 heures pour sécher le tube de manière à laisser une couche comprenant une multiplicité de particules séparées de ladite matière solide attachées à la surface intérieure du tube, la grosseur des particules dans la colonne étant comprise entre 0,4 et 12,0 µm.

FIG.1

FIG.4

C4 C5 C6 C7 C8 C9 C10 C11 C12

N P N P N P N P N P N P N P N P

10 20 30 40 50 60 70 80 90 100 110

FIG.2

FIG. 3